# EUROPEAN PATENT SPECIFICATION

(11) **EP 3 128 848 B1**
(45) Date of publication and mention of the grant of the patent: **24.05.2023**
(21) Application number: 15777023.1
(22) Date of filing: 10.04.2015
(51) Int. Cl.: A23B 7/06, A23B 7/04, A23N 12/04, B65B 25/04

(54) **A PROCESS FOR TREATING AVOCADOS**
VERFAHREN ZUR BEHANDLUNG VON AVOCADOS
PROCESSUS DE TRAITEMENT DE AVOCATS

(30) Priority: 11.04.2014 AU 2014901332
(43) Date of publication of application: 15.02.2017
(73) Proprietor: Naturo Innovations Pty Ltd, Coolum Beach QLD 4573 (AU)
(72) Inventor: HASTINGS, Jeffrey John, Maleny QLD 4560 (AU)
(74) Representative: Kolster Oy Ab
(86) International application number: PCT/AU2015/050167
(87) International publication number: WO 2015/154150

(56) References cited:
- EP-A2- 2 692 245
- EP-B1- 0 498 972
- WO-A1-03/067996
- WO-A1-2004/100670
- AU-A4- 2014 101 330
- US-A- 3 361 578
- US-A- 3 910 175
- US-A- 4 629 629
- US-A- 5 384 147
- US-B1- 6 358 555
- S.J. GLASSCOCK ET AL: "Microwave Blanching Of Vegetables For Frozen Storage", HOME ECONOMICS RESEARCH JOURNAL, vol. 11, no. 2, 3 December 1982 (1982-12-03), pages 149-158, XP055088403, ISSN: 0046-7774, DOI: 10.1177/1077727X8201100205

## Description

### TECHNICAL FIELD

This invention relates to a process, system and apparatus for treating cut Avocados that are susceptible to browning or discolouration even during refrigeration.

### BACKGROUND ART

Some fruits and vegetables such as the avocado present unique challenges to the food industry. Avocados are particularly unusual because they are highly susceptible to chilling injury. If they are stored at refrigeration temperatures for very long they will discolour and develop off-flavours. Whilst many people throughout the world enjoy eating avocados, difficulties in storing sliced avocado, and the rapid degradation of their desirable organoleptic traits once they are cut, implies that they are not widely used in shelf stable foods. Instead, avocados are largely consumed when freshly cut such as in salads, in sushi, on sandwiches, in guacamole, or simply sliced. Moreover, the known food treatment methods that render most other fruits and vegetables stable further degrades the avocados at an undesirable state. Unless avocados are immediately consumed after slicing, they are difficult to use because their flavour and colour degrades rapidly. This is true whether or not the sliced avocado is maintained at room temperature or at refrigeration temperature.

Conventional food preservation methods that use heat and pressure tend to activate the native enzymes in the avocado and undesirably affect texture, taste, and appearance of an avocado and likely negatively affect the avocado. Avocados have a high fat content and also contain large amounts of degradative enzymes such as lipases, lipoxygenases, polyphenoloxidase, and methyl pectinases. Once an avocado is sliced the enzymes are released. The enzymes are then able to act upon the fat and other components of the fruit. The enzymes, in particular the lipases, degrade the fats and thus off flavours including rancidity are developed. These enzymes are also responsible for discolouration or browning of the fruit. This browning at least in part is caused due to an enzyme called polyphenoloxidase which is also present in mushrooms, apricots, pears, cherries, peaches, and dates. The polyphenoloxidase (PPO) oxidizes phenolic compounds in the pulp tissue of a fruit and causes condensation to form brown or grey polymers. Whilst in a whole fruit this is not a problem bruising or slicing disrupt cells in the pulp as a result of which the enzymes and the phenolic compounds come into contact with each other and react to form the dark pigments.

WO2004/100670 discloses a method of processing avocado meat comprising heating the avocados to a temperature sufficient to substantially denature native degradative enzymes. In the method pitted, peeled avocados are immersed in an alkaline solution having a pH of greater than 8. The avocados after treatment are slightly basic. US5384147 discloses a method of processing fresh avocados into pulp or guacamole wherein the mixed pulp is drawn into a chamber where the pulp is exposed to a high vacuum and thereafter the vacuum is slowly released. In the method substantially all air is removed from the cells of the fruit product and its surrounding environment during packaging. In addition at least a partial vacuum is applied to the pulp within the packaging before the packaging is sealed. US6358555 discloses a process for producing frozen avocados which do not disintegrate upon thawing. The process includes the steps of cutting avocados into a plurality of pieces and removing seeds from bodies of the pieces, heating the avocado pieces in a steam tank by application of steam, removing the avocado pieces from the steam tank, and freezing the avocado pieces quickly at an ultra-low temperature.

Air also acts to degrade the appearance and the flavour of avocados. The beautiful bright green colour characteristic of a ripe and freshly cut avocado is from the chlorophyll present in the fruit. However, Magnesium in chlorophyll is oxidized upon exposure to the air. Once oxidized, the chlorophyll changes colour from a vibrant green to a brownish green colour. Once again this change of colour is less appetizing in appearance than the bright green of a freshly sliced avocado.

Therefore, in view of the above shortcomings there has been a long felt need for treating avocados in a manner that preserves the colour and flavour of fruits such as avocados even after the avocados are sliced, or in the case of guacamole preparation, even after the avocados are macerated.

The reference to any background information in this specification is not, and should not be taken as an acknowledgement or any form of suggestion that the prior art forms part of the common general knowledge.

### SUMMARY OF INVENTION

It is disclosed a process for treating fruits or vegetables for minimize browning upon subsequent processing, handling, and storage (not part of the invention), the method comprising:
(a) separating edible pulp tissue from inedible tissue of the fruit or vegetable;
(b) blanching said edible pulp tissue in steam for a pre-determined blanching time period at a blanching pressure that is less than or equal to atmospheric pressure, the blanching time period being less than a cooking time period required to cook the edible pulp tissue;
(c) cooling the blanched pulp tissue and extracting residual heat from the blanched pulp tissue; and
(d) freezing the cooled pulp tissue to obtain at least partially frozen pulp tissue;
   wherein the frozen pulp tissue obtained from step (d) possesses substantially similar organoleptic properties as freshly separated pulp tissue in (a).

The invention provides a process for treating avocados for minimize browning upon subsequent processing, handling, and storage, as described in the appended claims.

Preferably, the blanching time period is less than a cooking time period required to cook the edible pulp tissue.

As should be relatively clear, the blanching step will preferably take place without directly contacting edible pulp tissue with water by immersion.

Preferably, a pre-determined volume of steam is used for the said blanching step (b) for a pre-determined volume of edible pulp tissue.

The steam may circulate about the edible pulp tissue via natural or forced convection currents. Forced convection will typically require a circulation device such as a fan or blower.

In an embodiment, the process further comprises an additional step of inducing turbulent flow to the steam in the blanching step (b).

In an embodiment, the process comprises transporting the separated edible tissue on a conveyor apparatus to a blanching chamber for carrying out the blanching step (b). The separated edible tissue is positioned on an endless conveyor belt driven by a conveyor drive mechanism. As a result, the separated edible pulp tissue is passed into the blanching chamber and thereby conveyed in and out of the blanching chamber.

The operating speed (Cs) of the conveyor belt driven by the drive mechanism may be varied by a control system for controlling a rate of passage of the edible tissue through the blanching chamber.

In an embodiment, the freezing step (d) comprises rapid freezing of at least an outer surface of the edible tissue.

In an embodiment, after the cooling step, the cooled and blanched pulp tissue is positioned on a freezing conveyor belt driven by a freezing conveyor drive and passed into a freezing chamber for carrying out the freezing step (d) and for passing the frozen pulp tissue obtained from step (c) out of the freezing chamber. An operating speed (CF) of the freezing conveyor belt driven by the freezing conveyor drive may be varied for controlling a rate of passing the blanched tissue into the freezing chamber.

In an embodiment, the blanching step (b) is preceded by a segmenting step in which the separated edible tissue from step (a) is segmented into discrete pieces. Preferably, the segmenting is carried out by slicing the edible pulp tissue into the discrete pieces.

The blanching time period may be in the range of 1-10 minutes, preferably 2 -6 minutes and more preferably 3-5minutes.

Preferably, the freezing step (d) is carried out for a freezing time period in the range of 2-6 minutes and more preferably 3-5 minutes. In alternative embodiments the freezing step may also be carried out for longer time periods in excess of 6 minutes.

It is disclosed an apparatus for blanching segmented fruits or vegetables, the apparatus comprising: a conveyor system for transporting said fruits or vegetables from one end of a blanching chamber to an opposite end-, the conveyor system comprising a conveyor belt positioned on two or more drive rollers for transporting said fruits or vegetables and adapted to be driven by a drive mechanism; the blanching chamber comprising a shroud overlying the conveyor belt and in longitudinal alignment in relation to the conveyor belt to at least partially enclose steam produced from water in a bath positioned underlying the conveyor belt and in longitudinal alignment with the shroud and the conveyor belt; wherein during use the steam produced in the bath is at least partially enclosed by the shroud thereby exposing the segmented fruits or vegetables positioned on the conveyor belt to steam and blanching the fruits and vegetables in the blanching chamber at a blanching pressure that is less than or equal to atmospheric pressure (not part of the invention).

Preferably, the conveyor belt is adapted for allowing passage of steam therethrough from an underside in use position of the conveyor belt to an in use fruit or vegetable supporting surface of the belt. The conveyor belt may comprise perforations for passage of steam therethrough.

In an embodiment, the apparatus further comprises a control system for varying an in use belt speed of the conveyor belt thereby varying blanching time period of the fruits and vegetables in the blanching chamber (not part of the invention). Preferably, the control system is adapted to vary the in use belt speed with reference to one or more parameters relating to the segmented fruits and vegetable positioned on the conveyor belt during use. The control system may also be sufficiently adapted to prevent the in use belt speed from being below a pre-determined value of belt speed.

In an embodiment, the apparatus further comprises a steam control mechanism for controlling steam volume, steam pressure and/or steam temperature (not part of the invention).

It is also disclosed a system for treating segmented fruits or vegetables upon, the system comprising the apparatus for blanching as described in the preceding sections and further comprising a cooling apparatus positioned for receiving and extracting heat from the blanched fruits or vegetables and a freezing apparatus for receiving the cooled fruits or vegetables for at least partially freezing the segmented fruits or vegetables (not part of the invention).

Without wishing to be bound by theory, it is hypothesized that blanching of the segmented avocados for a designated time period as described in the aforementioned sections assists in inhibiting the reaction between PPO and the phenolic compounds present in the edible tissue thereby preventing or at least reducing the extent of browning in the edible tissue. It is also hypothesized that cooling and subsequent freezing of the blanched edible tissue after a designated or threshold time period assists in preventing the initial blanching progressing to complete cooking of the edible pulp tissue while at the same time helps in retaining the browning minimisation effect imparted by the blanching.

Preferably, the conveyor system transports blanched avocados to the cooling apparatus and subsequent to the extraction of heat further transports the cooled fruits or vegetables to the freezing apparatus.

In an embodiment, the system further comprises a fruit segmenting apparatus for separating edible tissue from inedible tissue of the fruit or vegetable and segmenting the separated edible tissue to obtain segmented fruits or vegetables received into the blanching chamber (not part of the invention). Preferably, the fruit segmenting apparatus comprises slicing blades for slicing the separated edible tissue into segmented fruits or vegetables (not part of the invention).

### BRIEF DESCRIPTION OF DRAWINGS

Figure 1 is a flow chart of the process in accordance with a first embodiment of the present invention.
Figure 2A is a top- down view of an apparatus (not part of the present invention).
Figure 2B is a side-elevation view of an apparatus (not part of the present invention).
Figure 2C is an end-elevation view of an apparatus (not part of the present invention).

### DESCRIPTION OF EMBODIMENTS

Referring now to the drawings, the process for treating avocados in order to minimise browning upon subsequent processing, handling, and storage will be explained in greater detail.

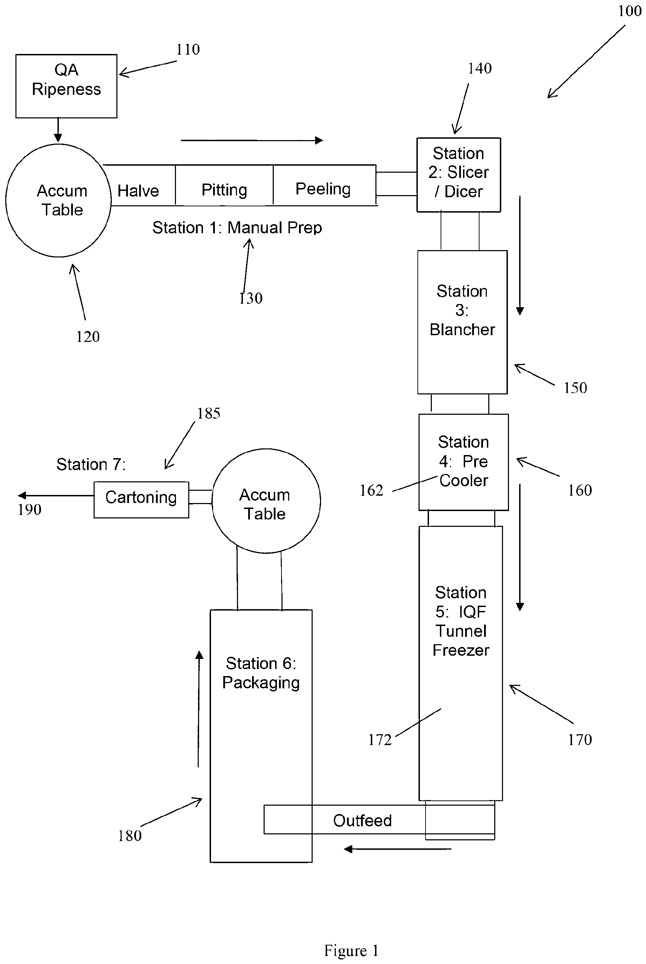

Figure 1 refers to a flow chart of a process 100 in accordance with an embodiment of the present invention. In a first ripeness assessment step 110, whole avocados are classified by using a penetrometer to classify the avocados on the basis of their ripeness. In one preferred assessment, avocados with a ripeness rating of greater than 70 are selected for the process in accordance with the present invention. The selected fruits are then collected on an accumulation counter in an accumulation step 120. In a subsequent manual handling step 130, each of the fruits is then sliced into half using a slicing implement such as a sharp knife (132) and the pit or the seed is manually removed and discarded from each of the selected fruits (134) and the exocarp/skin is peeled by scooping out the edible /mesocarp of the fruit. The mesocarp is also known as the flesh of the avocado, and this is the edible and most abundant part of the fruit. The edible tissue (which is in two parts-peeled avocado halves) is subsequently transported to a segmenting station 140. The segmenting station 140 comprises a series of rotating blades which slices and/or dices the mesocarp resulting in segmented pieces of the fruit. The segmented pieces are visually inspected at this stage to ensure that the pieces are separate from each other before being undergoing blanching in a blanching step 150.

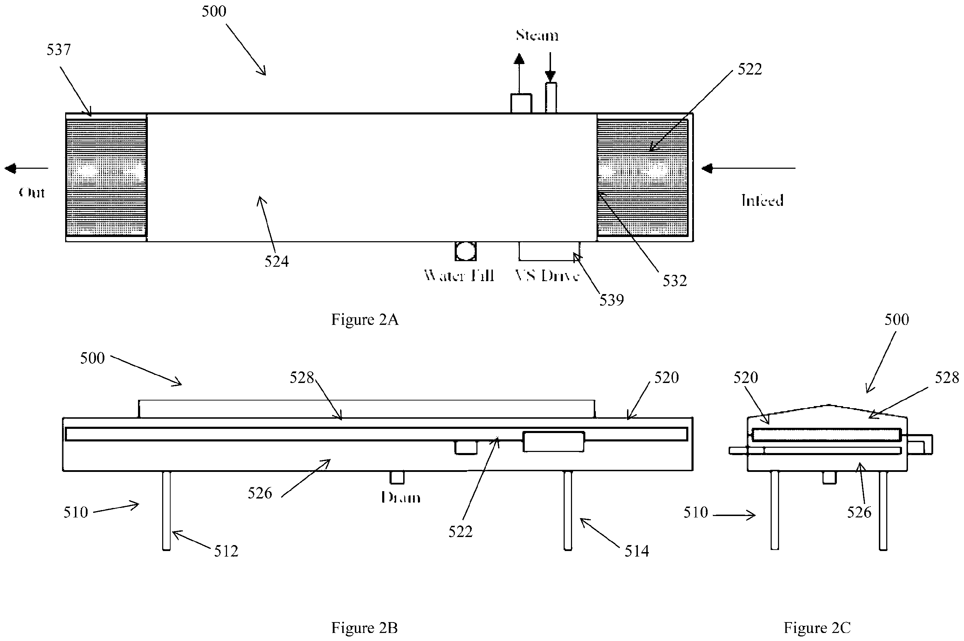

Referring to Figures 2 A, 2B and 2C, a blancher 500 is used for the blanching step 150. The apparatus is mounted on a frame 510 including a plurality of supporting legs 512 and 514 extending vertically. The frames support a conveyor assembly 520 with a conveyor belt in the form of an endless belt 522 supported on rollers (not shown). The frame 510 comprises a shroud in the form of a hood 524 that extends along the longitudinal direction of the endless belt 522 and is positioned to be overlying the endless belt 522. The hood 524 is structurally configured to be in substantial longitudinal alignment with the endless belt 522. An elongate bath 526 for containing water is positioned on underside of the endless belt 522 in substantially longitudinal alignment with the hood 524. The water bath is provided with an inlet means and an outlet means for supplying water and draining water respectively. The hood 524 and the water bath 526 positioned on the overside and underside respectively in relation to the endless belt 526 and together define an interior space of a blanching chamber 528. In a typical blanching step 150, the segmented pieces of the fruit from step 140 are positioned on the endless belt 522 at a receiving end 532 of the blancher. A variable speed drive motor 534 is then actuated to drive the endless belt 524 on the rollers. The drive motor 534 is also connected to a control system 536 that controls the speed of the drive motor 534. The control system 536 comprises a sensory mechanism including sensors that are sufficiently adapted to ascertain parameters such as size, weight etc. of the segmented fruit pieces positioned on the endless belt 524. The control system 536 processes the parameters and computes an optimal belt speed for passage of the segmented fruit pieces through the blanching chamber 528 in order to ensure suitable blanching. The control system 536 also controls the belt speed such that the belt speed does not fall below a pre-set minimum belt speed. It is important to appreciate that the total time of exposure of the segmented fruit pieces is directly proportional to the belt speed of the endless belt 524. The time of exposure of the segment fruit pieces to a steam environment is critical to achieving the desired outcome of inhibiting the impact of the 'browning' enzyme Polyphenoloxidase (PPO) but not exposing pieces for so long that they tend to 'cook' . Once the conveyor drive motor 534 is actuated in conjunction with control system 536, the steam control system 540 is also activated. The steam control system heats the water contained in the bath 526 positioned underneath the endless belt 522. As the water in the bath 526 is heated, steam is formed and the steam (water vapour molecules) rises due to the formation of convection currents. As the steam starts rising from the bath it passes through the perforations provided in the endless belt 522. In doing so, the steam contacts the segmented fruit pieces positioned on the belt during the time period (time of exposure/blanching time) of being transported from the receiving end 532 of the blanching chamber 528 to the opposite end of the blanching chamber 528. The positioning of the hood 524 prevents the rapid escape of the steam and allows the steam to accumulate within the blanching chamber 528. It is important to appreciate that the structural configuration of the hood 524, the belt 522and water bath 528 is such that the pressure in the blanching chamber 528 never exceeds atmospheric pressure. This is achieved by providing a blanching chamber 528 that is not sealed from the atmosphere.
Furthermore, the steam used for the blanching process is not pressurised in any manner such by use of nozzles, spraying manifolds etc. before being used for the blanching process of the present invention.

Upon exiting the blanching chamber the blanched fruit pieces are cooled in a cooling step 160. This cooling step should be carried out preferably as soon as possible in order to extract heat from the blanched fruit pieces. The blanched fruit pieces exiting the blanching chamber 528 from the exit end 537 of the blancher 500 on the endless belt 522 are then directed into a cooling station 162. Pre-cooling of the blanched fruit pieces may be carried out by an air chilling mechanism. The air chiller ducts incoming warm moist air surrounding the blanched fruit pieces and releases cooled dry air. The pre-cooling step assists in removing any water that may have inadvertently condensed on the surface of the avocado pieces. The pre-cooling step 160 is introduced prior to a freezing step to lower the heat coefficient and increase freezing efficiency. This is predicated primarily on commercial reasoning to lower the gas usage cost of IQF freezing at the subsequent station.

After the pre-cooling step is conducted, the pre-cooled avocado fruit pieces are transported out of the pre-cooling station 162 and subsequently transported into a freezing station in the form of an Independent Quick Frozen (IQF) tunnel 172 to carry out a freezing step 170. The primary goal of the freezing step 170 is to freeze the avocado pieces as fast as possible in order to minimise water crystallisation of the cut surfaces and produce a final frozen product that comprises substantially similar organoleptic characteristics as that of fresh-cut avocado. To achieve this, Independent Quick Frozen (IQF) freezing technology is used, with carbon dioxide (C02) being identified as the preferred refrigerating freezing gas. The endless belt 524 carries the avocado pieces from the pre-cooler station 162 into the IQF freezing tunnel for a pre-determined freezing exposure time. The preferable temperature for freezing the avocado pieces is from -10° F. to -150° F., and more preferably from -70° F. to -120° F. If the temperature is too low, the avocado pieces cannot endure such low temperature and cracks or fissures might be caused. If the temperature is too high, it takes too much time to freeze resulting in an inefficient operation. The extent of exposure of the cooled avocado pieces is determined by the belt speed of the conveyor belt when it is passing the IQF freezing tunnel 172. In one preferred operating configuration, the belt speed of the endless belt 522 may be controlled to be the same as the belt speed used during the blanching step. However, in alternative configurations, the belt speed may be varied using the control system 534. The freezing step must at least be carried out for a sufficient time period that results in formation of at least a 'crust' freeze on each of the avocado piece subjected to the freezing step 170. Subsequent internal (core) freezing may be carried out in later steps. Alternatively, the freezing step 170 may also be carried out for a longer time period to ensure complete freezing in the IQF freezing tunnel 172. The requirement of at least carrying out crust freezing limit the extent to which avocado pieces stick to each other, which is an important consideration. Rapid freezing is an important step because fruits such as avocado consist of cells that are filled with water, so that the simple freezing convection (gas or liquid) causes the water to freeze forming ice crystals disrupting the structure and cracking the cell walls of the fruit. By subsequently thawing of the fruit or vegetable that is frozen by simple freezing, the water comes out through the cracked cell walls, leaving a texture that is aesthetically not appealing. The faster the fruit is frozen, smaller the water crystals; thus less disrupting the cell walls, wherewith less liquid is released when thawing.

After the conclusion of freezing step 170, the frozen fruit pieces exit the IQF tunnel 172 on the endless belt 522 and reach a packaging station 180. The packaging step 180 mainly requires the use of suitable packaging such as vacuum seal packaging to prevent the exposure of the frozen fruit pieces to ambient conditions in order to avoid contamination. Any other alternative forms of packaging may also be used in further advantageous embodiments for avoiding contamination. Another important requirement is to limit exposure of the frozen fruit pieces to UV light in order to avoid pigment fading. The sealed fruit pieces may be further packaged into storage containers such as carton boxes in a further packaging step 185 before being stored in cold storage in a conventional cold storage facility 190.

The frozen avocados produced by conventional methods easily disintegrate and discolour rapidly at the time of thawing or they are very expensive. However, the frozen avocado pieces produced according to the process of the present invention can preserve their integration, shape and colour for a period of more than 2 weeks after thawing. Moreover, the taste of the avocado pieces thus produced is maintained in a good condition.

### EXAMPLE 1

In accordance with the ripeness assessment step 110 described in earlier sections ripeness assessment of a batch of avocados with a combined weight of 5kgs was carried out using a penetrometer and all fruits with a ripeness of greater than 70 N were selected. The fruits were subjected to steps 1 10 to 140 in accordance with the present invention to obtain sliced fruit pieces. Half of the sliced fruit pieces were segregated for the blanching, pre-cooling and freezing steps in accordance with the process of the present invention and the other half was marked as a TEST batch and was left untreated after being sliced into smaller pieces and used a comparative example. Any fruit with exocarp (skin) that had been penetrated, was not selected. The temperature of the core of the fruits was recorded to be in the range of 9-12°C.

At the end of the segmentation step 140, the segmented pieces were visually inspected by personnel and aligned on the endless belt 522 for maximum orientation with dimensions of the endless belt 522. The width and length of the endless belt 522 used in Example 1 were 900mm and 3.5m respectively. Blanching was carried in accordance with the blanching step 150 for blanching time period of 3-5 minutes. The belt speed was adjusted using the control system 534 in order to ensure that the segmented avocado pieces passed through the blanching chamber 528 for the time period of 3-5minutes. After the blanching step, the pre-cooling step 160 was carried out to reduce the temperature of the blanched avocado pieces to a temperature in the range of 20-25 °C. After the pre-cooling step, the cooled avocado pieces were subjected to ICQ freezing in the IQF tunnel in accordance with the rapid cooling step 170 for a freezing time period of 5 minutes.

With respect to the shape of the avocado pieces, it was observed that the original shape of each avocado pieces from Example 1 was preserved on and after thawing. In relation to any visually observable colour changes, no significant change was observed until at least ten days with some individual pieces retaining their original colour for as long as 14 days.
Thereafter, the surface of the avocado pieces was observed to become gradually blackened due to oxidization.

The taste of the thawed avocado pieces was good enough for eating. Furthermore, long term tests carried out for a 12 month period have also indicated that the pieces retained their colour taste and other desired organoleptic properties once they were thawed after being kept in frozen storage for 12 months.

The frozen avocados from the untreated batch (the comparative example) easily disintegrate and discolour rapidly at the time of thawing. However, the frozen avocado pieces produced according to the present invention can preserve their integration, shape and colour for almost 2 weeks after thawing. Moreover, the taste of the avocado pieces thus produced is maintained in a good condition.

Throughout the specification, the terms "edible tissue", "pulp tissue" and "pulp" refer to the mesocarp of the fruit which is generally the succulent and fleshy middle layer a fruit located in between the pericarp (the outer skin) and the endocarp (the seed). The mesocarp is usually the major part of the fruit that is eaten, for example, mesocarp makes up most of the edible part of an avocado. Therefore these terms may refer to the fleshy edible regions of any fruit.

In the present specification and claims (if any), the word 'comprising' and its derivatives including 'comprises' and 'comprise' include each of the stated integers but does not exclude the inclusion of one or more further integers.

Reference throughout this specification to 'one embodiment' or 'an embodiment' means that a particular feature, structure, or characteristic described in connection with the embodiment is included in at least one embodiment of the present invention. Thus, the appearance of the phrases 'in one embodiment' or 'in an embodiment' in various places throughout this specification are not necessarily all referring to the same embodiment. Furthermore, the particular features, structures, or characteristics may be combined in any suitable manner in one or more combinations.

In compliance with the statute, the invention has been described in language more or less specific to structural or methodical features. It is to be understood that the invention is not limited to specific features shown or described since the means herein described comprises preferred forms of putting the invention into effect. The invention is, therefore, claimed in any of its forms or modifications within the proper scope of the appended claims appropriately interpreted by those skilled in the art.

## Claims

1. A process for treating avocados to minimize browning upon subsequent processing, handling, and storage, the method comprising:
(a) separating the mesocarp from the pericarp and the endocarp of the avocado;
(b) blanching said mesocarp by contacting the mesocarp with with steam for a pre-determined blanching time period within a blanching chamber, wherein at least a portion of the blanching chamber is not sealed from the atmosphere;
(c) cooling the blanched mesocarp and extracting residual heat from the blanched mesocarp; and
d) freezing the cooled mesocarp to obtain at least partially frozen mesocarp.

2. The process in accordance with claim 1, wherein at step (c) the mesocarp is cooled below a cooking temperature.

3. The process in accordance with any one of the preceding claims wherein the blanching time period is less than a cooking time period required to cook the mesocarp.

4. The process in accordance with any one of the preceding claims wherein at step (b) mesocarp is contacted with steam at a pressure less than or equal to atmospheric pressure.

5. The process in accordance with any one of the preceding claims further comprising the step of inducing turbulent flow of the steam in the blanching step (b).

6. The process in accordance with any one of the preceding claims comprising transporting the separated mesocarp on a conveyor apparatus to a blanching chamber for carrying out the blanching step (b).

7. The process in accordance with claim 6 wherein the separated mesocarp is positioned on an endless conveyor belt driven by a conveyor drive mechanism for passing the separated mesocarp into the blanching chamber and convey blanched mesocarp out of the blanching chamber, wherein a rate of passage of the mesocarp through the blanching chamber is controlled by varying in operating speed (b) of the conveyer belt driven by the drive mechanism.

8. The process in accordance with any one of the preceding claims wherein the freezing step (d) comprises rapid freezing of at least an outer surface of the mesocarp.

9. The process in accordance with any one of the preceding claims wherein after the cooling step (c), the cooled and blanched mesocarp is positioned on a freezing conveyor belt driven by a freezing conveyor drive and passed into a freezing chamber for carrying out the freezing step (d) and for passing the frozen mesocarp obtained from step (c) out of the freezing chamber.

10. The process in accordance with claim 9 comprising the step of varying operating speed (C_{F}) of the freezing conveyor belt driven by the freezing conveyor drive for controlling a rate of passing the blanched mesocarp into the freezing chamber.

11. The process in accordance with any one of the preceding claims wherein the blanching step (b) is preceded by a segmenting step in which the separated mesocarp from step (a) is segmented into discrete pieces.

12. The process in accordance with any one of the preceding claims wherein the blanching time period is in the range of 1-10 minutes, preferably 2 -6 minutes and more preferably 3-5minutes.

13. The process in accordance with any one of the preceding claims wherein the freezing step (c) is carried out for a freezing time period in the range of 2-6 minutes and more preferably 3-5 minutes.

14. The process in accordance with any one of the preceding claims wherein the avocados have a ripeness rating of greater than 70N.

## Patentansprüche

1. Verfahren zur Behandlung von Avocados, um deren Bräunung bei einer anschließenden Bearbeitung, Handhabung und Lagerung zu minimieren, wobei das Verfahren umfasst:
(a) das Trennen des Mesokarps vom Perikarp und Endokarp der Avocado;
(b) das Blanchieren des Mesokarps durch Inkontaktversetzen des Mesokarps mit Dampf während eines vorher festgelegten Blanchierzeitraums in einer Blanchierkammer, wobei mindestens ein Teil der Blanchierkammer gegenüber der Atmosphäre nicht dicht ist;
(c) das Kühlen des blanchierten Mesokarps und das Extrahieren der Restwärme aus dem blanchierten Mesokarp; und
(d) das Gefrieren des gekühlten Mesokarps, um ein mindestens teilweise gefrorenes Mesokarp zu erhalten.

2. Verfahren nach Anspruch 1, wobei bei Schritt (c) das Mesokarp unter eine Gartemperatur gekühlt wird.

3. Verfahren nach einem der vorangehenden Ansprüche, wobei der Blanchierzeitraum unter dem Garzeitraum liegt, der erforderlich ist, um das Mesokarp zu garen.

4. Verfahren nach einem der vorangehenden Ansprüche, wobei bei Schritt (b) das Mesokarp mit Dampf bei einem Druck unter oder gleich dem atmosphärischen Druck in Kontakt versetzt wird.

5. Verfahren nach einem der vorangehenden Ansprüche, das ferner bei dem Blanchierschritt (b) den Schritt des Einleitens eines turbulenten Dampfstroms umfasst.

6. Verfahren nach einem der vorangehenden Ansprüche, das den Transport des getrennten Mesokarps auf einer Transportvorrichtung in eine Blanchierkammer zur Durchführung des Blanchierschritts (b) umfasst.

7. Verfahren nach Anspruch 6, wobei das getrennte Mesokarp auf einem von einem Transportband-Antriebsmechanismus angetriebenen Endlos-Förderband positioniert wird, um das getrennte Mesokarp in die Blanchierkammer zu verbringen und das blanchierte Mesokarp aus der Blanchierkammer zu befördern, wobei die Durchgangsgeschwindigkeit des Mesokarps durch die Blanchierkammer durch Variieren der Betriebsgeschwindigkeit (b) des von dem Antriebsmechanismus angetriebenen Förderbands gesteuert wird.

8. Verfahren nach einem der vorangehenden Ansprüche, wobei der Gefrierschritt (d) das schnelle Gefrieren von mindestens der äußeren Oberfläche des Mesokarps umfasst.

9. Verfahren nach einem der vorangehenden Ansprüche, wobei das gekühlte und blanchierte Mesokarp nach dem Kühlschritt (c) auf einem von einem Gefrier-Förderbandantrieb angetriebenen Gefrier-Förderband positioniert und in eine Gefrierkammer für die Durchführung des Gefrierschritts (d) und für die Verbringung des in Schritt (c) erhaltenen gefrorenen Mesokarps aus der Gefrierkammer verbracht wird.

10. Verfahren nach Anspruch 9, das den Schritt der Variation der Betriebsgeschwindigkeit (C_{F}) des vom Gefrier-Förderbandantrieb angetriebenen Gefrier-Förderbands umfasst, um die Geschwindigkeit des Verbringens des blanchierten Mesokarps in die Gefrierkammer zu steuern.

11. Verfahren nach einem der vorangehenden Ansprüche, wobei dem Blanchierschritt (b) ein Segmentierungsschritt vorausgeht, bei dem getrennte Mesokarp aus Schritt (a) in einzelne Stücke segmentiert wird.

12. Verfahren nach einem der vorangehenden Ansprüche, wobei sich der Blanchierzeitraum im Bereich von 1 bis 10 Minuten, vorzugsweise von 2 bis 6 Minuten und bevorzugter von 3 bis 5 Minuten befindet.

13. Verfahren nach einem der vorangehenden Ansprüche, wobei der Gefrierschritt (c) während eines Gefrierzeitraums durchgeführt wird, der sich in dem Bereich von 2 bis 6 Minuten und bevorzugter von 3 bis 5 Minuten befindet.

14. Verfahren nach einem der vorangehenden Ansprüche, wobei die Avocados einen Reifegrad von über 70N aufweist.

## Revendications

1. Procédé pour traiter des avocats afin de minimiser leur brunissement lors d'un traitement, d'une manipulation et d'un stockage subséquents, le procédé comprenant :
(a) la séparation du mésocarpe d'avec le péricarpe et l'endocarpe de l'avocat ;
(b) le blanchiment dudit mésocarpe par mise en contact du mésocarpe avec de la vapeur pendant une période de temps de blanchiment prédéterminée à l'intérieur d'une chambre de blanchiment, dans lequel au moins une partie de la chambre de blanchiment n'est pas étanche vis-à-vis de l'atmosphère ;
(c) le refroidissement du mésocarpe blanchi et l'extraction de la chaleur résiduelle du mésocarpe blanchi ; et
(d) la congélation du mésocarpe refroidi pour que soit obtenu un mésocarpe au moins partiellement congelé.

2. Procédé selon la revendication 1, dans lequel, à l'étape (c), le mésocarpe est refroidi en-deçà de la température de cuisson.

3. Procédé selon l'une quelconque des revendications précédentes, dans lequel la période de temps de blanchiment est inférieure à la période de temps de cuisson requise pour cuire le mésocarpe.

4. Procédé selon l'une quelconque des revendications précédentes, dans lequel, à l'étape (b), le mésocarpe est mis en contact avec de la vapeur sous une pression inférieure ou égale à la pression atmosphérique.

5. Procédé selon l'une quelconque des revendications précédentes, comprenant en outre l'étape d'induction d'un écoulement turbulent de la vapeur dans l'étape de blanchiment (b) .

6. Procédé selon l'une quelconque des revendications précédentes, comprenant le transport du mésocarpe séparé sur un dispositif de convoyage jusqu'à une chambre de blanchiment pour la mise en œuvre de l'étape de blanchiment (b).

7. Procédé selon la revendication 6, dans lequel le mésocarpe séparé est positionné sur une courroie convoyeuse sans fin entraînée par un mécanisme d'entraînement de convoyeur pour faire passer le mésocarpe séparé dans la chambre de blanchiment et convoyer le mésocarpe blanchi hors de la chambre de blanchiment, dans lequel la vitesse de passage du mésocarpe à travers la chambre de blanchiment est contrôlée par la variation de la vitesse de fonctionnement (b) de la courroie convoyeuse entraînée par le mécanisme d'entraînement.

8. Procédé selon l'une quelconque des revendications précédentes, dans lequel l'étape de congélation (d) comprend la congélation rapide d'au moins la surface extérieure du mésocarpe.

9. Procédé selon l'une quelconque des revendications précédentes, dans lequel, après l'étape de refroidissement (c), le mésocarpe refroidi et blanchi est positionné sur une courroie convoyeuse de congélation entraînée par un entraînement de convoyeur de congélation et passé dans une chambre de congélation pour la mise en œuvre de l'étape de congélation (d) et pour le passage du mésocarpe congelé obtenu dans l'étape (c) hors de la chambre de congélation.

10. Procédé selon la revendication 9, comprenant une étape de variation de la vitesse de fonctionnement (C_{F}) de la courroie convoyeuse de congélation entraînée par l'entraînement de convoyeur de congélation pour contrôler la vitesse de passage du mésocarpe blanchi dans la chambre de congélation.

11. Procédé selon l'une quelconque des revendications précédentes, dans lequel l'étape de blanchiment (b) est précédée d'une étape de segmentation dans laquelle le mésocarpe séparé de l'étape (a) est segmenté en morceaux individuels.

12. Procédé selon l'une quelconque des revendications précédentes, dans lequel la période de temps de blanchiment est située dans la plage allant de 1 à 10 minutes, de préférence de 2 à 6 minutes et mieux encore de 3 à 5 minutes.

13. Procédé selon l'une quelconque des revendications précédentes, dans lequel l'étape de congélation (c) est effectuée pendant une période de temps de congélation située dans la plage allant de 2 à 6 minutes et mieux encore de 3 à 5 minutes.

14. Procédé selon l'une quelconque des revendications précédentes, dans lequel les avocats ont une note de maturation supérieure à 70N.
